# EUROPEAN PATENT APPLICATION

(11) **EP 4 745 820 A2**
(43) Date of publication of application: **20.05.2026**
(21) Application number: 26170805.1
(22) Date of filing: 16.04.2019
(51) Int. Cl.: G06F 21/73

(54) **SYSTEM AND METHODS FOR CHANGING ADDRESSES OF ONE OR MORE COMPONENTS**

(30) Priority: 16.04.2018 US 201815954355; 16.04.2018 US 201815954322
(62) Divisional of application: 19789404.1
(71) Applicant: Lexmark International, Inc., Lexington, KY 40550 (US)
(72) Inventor: BUSH, Stephen, Kentucky, KY 40475 (US); RADEMACHER, Timothy, Kentucky, KY 40504 (US)
(74) Representative: Cameron Intellectual Property Ltd

(57) **Abstract**

In an imaging device having a plurality of components, a method of determining an address of a component of the plurality of components. The method comprises updating, by component circuitry associated with the component, a pseudorandom number generator (PRNG) state based on a previous state thereof; generating, by the component circuitry, a plurality of new component addresses for the plurality of components based upon the PRNG state; and using, by the component circuitry, a distinct component address from the plurality of new component addresses as a component address for at least one subsequent communication with a master device.

## Description

### CROSS REFERENCE TO RELATED APPLICATIONS

This patent application is related to the United States Patent Application Serial No. XX/XXX,XXX, entitled "System and Methods for Changing Addresses of One or More Components," which is filed contemporaneously herewith and assigned to the assignee of the present application.

### STATEMENT REGARDING FEDERALLY SPONSORED RESEARCH OR DEVELOPMENT

None.

### REFERENCE TO SEQUENTIAL LISTING, ETC.

None.

### BACKGROUND

### 1. Technical Field

The present disclosure generally relates to addressing schemes and, more particularly, to changing addresses of components in an imaging device to provide enhanced security.

### 2. Description of the Related Art

Many computing systems, such as imaging systems, allow communication with peripheral devices using a shared bus to communicate data therebetween. Such a system is efficient in that a single bus is connected to each device. However, a set of rules or protocols is required in order to provide an orderly data flow so that more than one device does not attempt to use the shared bus at the same time. Often, a master or host device is the dominant device and controls the communications with the other devices, also known as slave devices. With this type of data communication system, the master device determines when to communicate with a slave device, and in response thereto, the slave device responds. The slave devices do not, on their own, initiate communications with the master device.

One well-known protocol for orderly data communications between the master device and one or more slave devices is the Inter-Integrated Circuit (I²C) protocol. In the I²C protocol, each slave device is uniquely identified with an address. When the master device, also known as a bus master, initiates communications with a specific slave device, the address of the slave device is transmitted with data and/or a command on the shared bus during the initiation of the communication. While all of the slave devices connected to the shared bus receive the data and/or command and the address from the bus master, only the slave device with the matching address responds to the data and/or command and sends back an acknowledgment to the bus master.

In some imaging devices, electronic authentication schemes associated with consumable supply items may be used. Consumable supply items may contain an integrated circuit chip or security device that communicates with a controller located in the imaging device. In such an arrangement, the imaging device includes a master device that initiates and controls passing of all communications including data, addresses, clock signals, and other control signals on a shared bus, and each supply item may be configured as a slave device. The master device may check the authenticity of each slave device by sending a verification challenge thereto and determining if the slave device correctly responds to the verification challenge. The authenticity is verified by the master device receiving from the slave device the correct response to the challenge. Otherwise, if the slave device does not respond correctly, the slave device may be detected as a clone or counterfeit and appropriate actions may be taken to protect against the use of unauthorized supply items in order to optimize performance of and/or prevent damage to the imaging device.

Some security devices in supply items communicate with the imaging device using 10-bit addressing on an I²C bus and use address changing as a security feature. In some address changing schemes, a certain number of bits of the supply item address are fixed based on a given supply type while the remaining bits are variable with an initial value of zero. Upon receiving an address change command, the security device of the supply item may change the variable portion of the address to a new value. The bus master in the imaging device may then communicate with that supply item using the new address. Periodically changing the addresses of supply items provides enhanced security since it increases the difficulty for unauthorized components to communicate with the bus master.

Support for 10-bit addressing mode, however, may not be as widespread with many I²C controllers supporting only 7-bit addressing. Unlike 10-bit addressing, 7-bit addressing generally results in higher data throughput because only one byte is required for an address compared to two bytes in 10-bit addressing. While offering certain advantages, such as higher data throughput, 7-bit addressing introduces disadvantages of its own when used in conjunction with the aforementioned address changing scheme utilizing fixed and variable address portions. More particularly, the number of possible addresses for supply items is reduced or limited since reducing the address size to 7 bits results in fewer bits available for use as variable address bits. For example, if 4 bits of the address were fixed, then the supply item would only have the 3 remaining bits as variable address bits, which translates to only eight possible addresses for supply items. Accordingly, an improved address-changing method for a shared bus system is desired.

### SUMMARY

Example embodiments of the present disclosure provide example methods that may be implemented in an imaging device or system to set addresses of a plurality of components or slave devices, such as supply devices, to thwart the use of unauthorized components as replacements for authorized components.

In one example embodiment, a method of determining addresses for a plurality of components includes receiving, by a slave device, an address change request from a master device. The slave device may be one of the plurality of components connected to the master device or a security module separate from the master device. In response to the received address change request, a pseudorandom number generator (PRNG) state may be updated based upon a previous state thereof. The example method may further include retrieving, for each component, a set of bits from the PRNG state to form a candidate address for the component. The example method may also include determining a new component address for the component based upon the candidate address. In one example aspect, retrieving the set of bits from the PRNG state for each component may include retrieving a set of successive bits from the PRNG state. In this address-changing scheme, new component addresses of the plurality of components may be determined based upon different sets of bits retrieved from the same PRNG state.

Determining the new component address for each component may include determining whether the candidate address is a valid address for assigning to the component. In one example aspect, determining whether the candidate address is a valid address may include determining whether the candidate address is a reserved address. In another example aspect, determining whether the candidate address is a valid address may include determining whether the candidate address is a default address. In still another example aspect, determining whether the candidate address is a valid address may include determining whether the candidate address is an address that has been assigned to another component. Upon determining that the candidate address is a valid address for assigning to the component, the candidate address may be assigned as the new component address. Upon determining that the candidate address is not a valid address for assigning to the component, the candidate address may be updated. In one example aspect, the candidate address may be updated by performing a mathematical operation on the candidate address to derive a new candidate address.

In another example embodiment, a method of determining an address of a component in an imaging device having a plurality of components includes updating, by component circuitry associated with the component, a pseudorandom number generator (PRNG) state based upon a previous state thereof. The component circuitry may update the PRNG state in response to receiving an address change request from a master device. The component circuitry may also generate a plurality of new component addresses for the plurality of components based upon the PRNG state. The component circuitry may then use a distinct component address from the plurality of new component addresses as a component address for at least one subsequent communication with the master device. The distinct component address may be determined based upon an index value associated with the component. Generating the new component addresses may include determining the new component addresses based upon different sets of bits retrieved from the PRNG state. In one example aspect, generating the new component addresses may include retrieving, for each component, a set of successive bits from the PRNG state to form a candidate address for each component. Generating the new component address may also include determining, for each component, a new component address based upon the candidate address.

In yet another example embodiment, a method of setting addresses of a plurality of components includes sending, by a master device, a command to a security module to retrieve new addresses for the plurality of components. In response to the command received, the security module may generate new addresses for the plurality of components based upon a PRNG state and then send the new addresses to the master device. In response to receiving the new addresses from the security module, the master device may send an address change request to each of the plurality of components. In response to the received address change request, each component may generate new addresses for the plurality of components based upon the PRNG state, the new addresses generated by each component correspond to the new addresses generated by the security module. Each component may then use a distinct new address as a new component address determined based upon an index value associated with the component. In one example aspect, the generating of the new addresses by the security module and each component may include retrieving, for each component, a set of bits from the PRNG state to form a candidate address for each component. The generating of the new addresses may also include determining, for each component, a new address based on the candidate address. In another example aspect, determining the new address for each component may include determining whether the candidate address is one of a reserved address, a default address, and an address that has been assigned to another component.

From the foregoing disclosure and the following detailed description of various example embodiments, it will be apparent to those skilled in the art that the present disclosure provides a significant advance in the art of determining and setting addresses in slave devices. Additional features and advantages of various example embodiments will be better understood in view of the detailed description provided below.

### BRIEF DESCRIPTION OF THE DRAWINGS

The above-mentioned and other features and advantages of the present disclosure, and the manner of attaining them, will become more apparent and will be better understood by reference to the following description of example embodiments taken in conjunction with the accompanying drawings. Like reference numerals are used to indicate the same element throughout the specification.
Fig. 1 is a diagrammatic view of an imaging system.
Fig. 2 is a block diagram depicting the imaging device of Fig. 1.
Fig. 3 is a block diagram of a shared bus system employing a bus master communicating with a plurality of components.
Fig. 4 is a flowchart illustrating one example embodiment of a method of changing and/or setting addresses of components in the shared bus system of Fig. 3.
Fig. 5 is a flowchart illustrating one example embodiment of a method of determining new addresses for each of the plurality of components.
Fig. 6 is a block diagram illustrating one example of a 256-bit pseudorandom number generator (PRNG) state with bits used to form new addresses for the plurality of components.
Fig. 7 is a block diagram illustrating a second example of a 256-bit pseudorandom number generator (PRNG) state with bits used to form new addresses for the plurality of components.
Fig. 8 is a flowchart illustrating one example embodiment of a method for verifying that the components have correctly changed their respective addresses.

### DETAILED DESCRIPTION OF THE DRAWINGS

It is to be understood that the disclosure is not limited to the details of construction and the arrangement of components set forth in the following description or illustrated in the drawings. The disclosure is capable of other example embodiments and of being practiced or of being carried out in various ways. For example, other example embodiments may incorporate structural, chronological, process, and other changes. Examples merely typify possible variations. Individual components and functions are optional unless explicitly required, and the sequence of operations may vary. Portions and features of some example embodiments may be included in or substituted for those of others. The scope of the disclosure encompasses the appended claims and all available equivalents. The following description is, therefore, not to be taken in a limited sense, and the scope of the present disclosure is defined by the appended claims.

Also, it is to be understood that the phraseology and terminology used herein is for the purpose of description and should not be regarded as limiting. The use herein of "including," "comprising," or "having" and variations thereof is meant to encompass the items listed thereafter and equivalents thereof as well as additional items. Further, the use of the terms "a" and "an" herein do not denote a limitation of quantity but rather denote the presence of at least one of the referenced item.

In addition, it should be understood that example embodiments of the disclosure include both hardware and electronic components or modules that, for purposes of discussion, may be illustrated and described as if the majority of the components were implemented solely in hardware.

It will be further understood that each block of the diagrams, and combinations of blocks in the diagrams, respectively, may be implemented by computer program instructions. These computer program instructions may be loaded onto a general purpose computer, special purpose computer, or other programmable data processing apparatus to produce a machine, such that the instructions which execute on the computer or other programmable data processing apparatus may create means for implementing the functionality of each block or combinations of blocks in the diagrams discussed in detail in the description below.

These computer program instructions may also be stored in a non-transitory computer-readable medium that may direct a computer or other programmable data processing apparatus to function in a particular manner, such that the instructions stored in the computer-readable medium may produce an article of manufacture, including an instruction means that implements the function specified in the block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus implement the functions specified in the block or blocks.

Accordingly, blocks of the diagrams support combinations of means for performing the specified functions, combinations of steps for performing the specified functions and program instruction means for performing the specified functions. It will also be understood that each block of the diagrams, and combinations of blocks in the diagrams, can be implemented by special purpose hardware-based computer systems that perform the specified functions or steps or combinations of special purpose hardware and computer instructions.

Disclosed are example systems and methods for changing addresses of components in a system, such as an imaging system. According to one example embodiment of the present disclosure, a controller may operate in conjunction with a bus master to initiate address change operations on components upon initialization or reset, such as after installation or at an instance when power is first supplied to the component, in order to change a default address of each component to a different address. In one example aspect, the bus master may send a command to a security module of the imaging system to retrieve new addresses for various components in the system. The security module may calculate new addresses for the components using a predetermined address change algorithm and return the new address values to the bus master. After receiving the new addresses from the security module, the bus master may send an address change command to each component. Each component may run the same address change algorithm performed by the security module in order for each component to derive the same addresses that the security module generated by way of the address change algorithm. Accordingly, addresses of all components in the imaging system may be known to each component. Each component may be assigned with an associated address index value based on a supply identifier from a configuration certificate. An address index value assigned to each component may be used to determine an address to be assigned to a particular component.

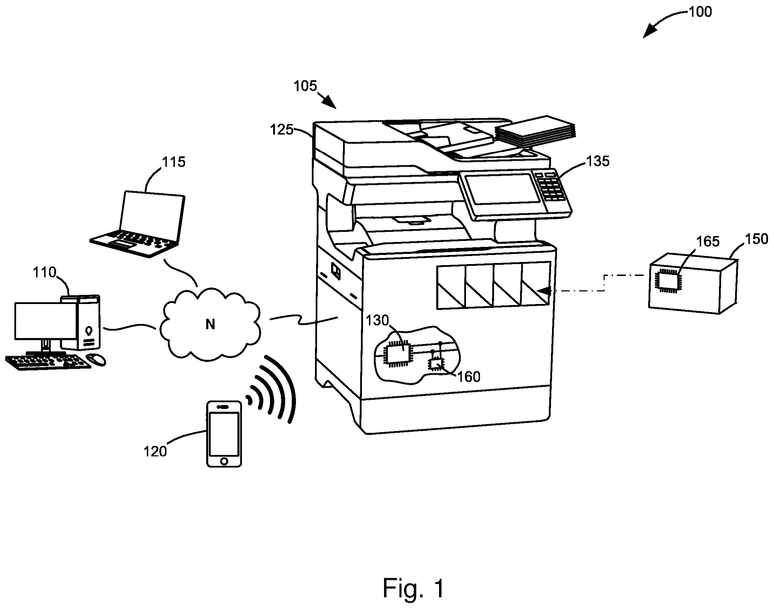

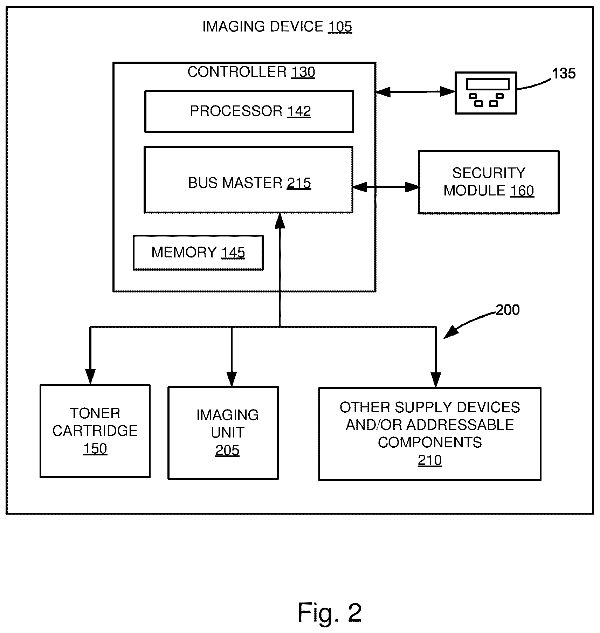

Referring now to the drawings, and particularly to Figs. 1 and 2, there is shown a diagrammatic view of an imaging system 100 used in association with the present disclosure. Imaging system 100 includes an imaging device 105 used for printing images on sheets of media. Image data of the image to be printed on a media sheet may be supplied to imaging device 105 from a variety of sources such as a computer 110, laptop 115, mobile device 120, scanner 125, or like computing device. The sources directly or indirectly communicate with imaging device 105 via wired and/or wireless connections. Imaging device 105 includes a controller 130 and a user interface 135. Controller 130 may include a processor 142 and associated memory 145 (shown in Fig. 2). In some example embodiments, controller 130 may be formed as one or more Application Specific Integrated Circuits (ASICs) or System-on-Chip (SoCs). Memory 145 may be any memory device which stores data and may be used with or capable of communicating with controller 130. For example, memory 145 may be any volatile or non-volatile memory or combination thereof such as, for example, random access memory (RAM), read-only memory (ROM), flash memory and/or non-volatile RAM (NVRAM) for storing data. Controller 130 may control the processing of print data. Controller 130 may also control the operation of a print engine during printing of an image onto a sheet of media.

In one example embodiment, imaging device 105 may employ an electronic authentication scheme to authenticate consumable supply items and/or replaceable units installed in imaging device 105. In Fig. 1, a representative consumable supply item, such as a toner cartridge 150, is shown. Consumable supply item 150 may be installed in a corresponding storage area in imaging device 105. To perform authentication on consumable supply item 150, imaging device 105 may utilize a security chip, device or module 160 incorporated in imaging device 105 and a security chip 165 attached to consumable supply item 150. Both security module 160 in imaging device 105 and security chip 165 in consumable supply item 150 may be configured as slave devices that connect to controller 130. In one example aspect, security module 160 in imaging device 105 may be similar to security chip 165 in consumable supply item 150, but security module 160 may be programmed differently from security chip 165. Security module 160 and security chip 165 may operate in conjunction with controller 130 to perform authentication functions, as will be explained in greater detail below.

Fig. 2 is a block diagram depicting imaging device 105 of Fig. 1. In this example embodiment, a shared bus system 200 may be employed to control various subassemblies and components and/or obtain status reports thereof. As seen in Fig. 2, various components such as an imaging unit 205, a toner cartridge 150, and other slave or supply devices and/or addressable components and subassemblies 210 capable of receiving and/or handling data such as a fuser, a laser scan unit, and a media feed mechanism, may be connected to shared bus system 200. Controller 130 may be generally configured to control a bus master 215. Controller 130 may also communicate with one or more or more components or subassemblies 150, 205, 210 in imaging device 105 over shared bus system 200.

Security module 160 may operate in conjunction with bus master 215 to facilitate establishing connections between controller 130 and various components and subassemblies 150, 205, 210 connected to shared bus system 200. For example, security module 160 may be configured to provide authentication functions, safety and operational interlocks, and/or address change functions related to imaging unit 205, toner cartridge 150, and other addressable components 210. In one example embodiment, security module 160 may be configured to generate new addresses for imaging unit 205, toner cartridge 150, and other addressable components 210 to facilitate establishing communication with controller 130.

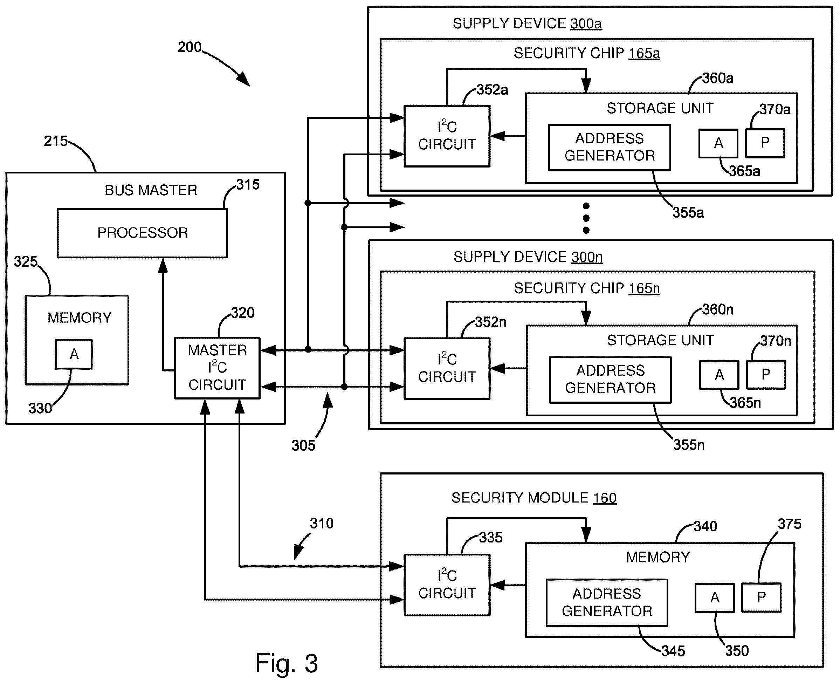

Fig. 3 illustrates one example embodiment of shared bus system 200 employing bus master 215 communicating with a plurality of components 150, 205, 210. In Fig. 3, bus master 215 may communicate with one or more supply devices 300a-300n, where n represents a total number of supply devices 300 in imaging device 105 communicating on shared bus 305. As used herein, the term "supply device" may refer to any addressable and/or replaceable component in imaging device 105 that communicates with controller 130, such as imaging unit 205, toner cartridge 150, and other addressable components 210 in Fig. 2. Hereinafter, any one of supply devices 300a-300n may be generally referred to as supply device 300.

Supply devices 300 may not be able to eavesdrop on the calculation of security module 160 of new addresses for supply devices 300, as will be discussed in further detail below. Security module 160 may be configured to communicate the new addresses to bus master 215. Bus master 215 may then communicate the new addresses to controller 130. In one example aspect, communication of the new addresses to bus master 215 and/or controller 130 may be kept private by using data encryption. While each of shared bus 305 and bus 310 is illustrated as a two-wire serial bus in this example embodiment, shared parallel bus structures or other wired structures may be utilized in other example embodiments. In some other alternative example aspects, security module 160 may communicate with bus master 215 over shared bus 305. In yet other example embodiments, structures that facilitate communication between bus master 215 and supply devices 300 and security module 160 may operate using wireless technology.

Shared bus system 200 may utilize the Inter-Integrated Circuit ("I²C") protocol. It will also be appreciated by those of ordinary skill in the art that other bus communication protocols, such as System Management Bus (SMB) protocols, UNI/O bus protocols, or other protocols used in bus structures having master/slave configurations may be utilized in other example embodiments.

Bus master 215 may include a processor 315. Bus master 215 may also include a master I²C circuit 320 which may be controlled by processor 315. Controller 130 and supply devices 300 may communicate with each other over shared bus system 200 via master I²C circuit 320 of bus master 215. In some example embodiments, processor 142 of controller 130 may function as processor 315 of bus master 215.

Processor 315 may include an associated memory 325 for storing instructions, as well as addresses of controller 130, security module 160, and supply devices 300. In one example embodiment, bus master 215 may store addresses of supply devices 300 in an address array A 330 in memory 325. In some example embodiments, memory 325 of bus master 215 may form part of memory 145 of controller 130. In some alternative example embodiments, a single memory device may be used for memory 325 and memory 145.

Security module 160 may include an I²C interface circuit 335 for interfacing the I²C protocol commands with bus master 215. In one example embodiment, security module 160 may be equipped with an address generator 345 for determining new addresses for supply devices 300. In some example aspects, address generator 345 may be a software algorithm stored in a memory 340. In other sample aspects, an address generator circuit may form part of security module 160. Address generator 345 may include a PRNG for generating addresses according to a predefined algorithm. The PRNG may be capable of generating a significant number of addresses but in a highly irregular and unpredictable manner. Security module 160 may store addresses of one or more supply devices 300 in an address array A 350 in memory 340.

Each of supply devices 300a-300n may include component circuitry, such as respective security chips 165a-165n each having an I²C interface circuit 352a-352n for interfacing the I²C protocol commands with bus master 215. Each supply device 300a-300n may be equipped with a corresponding address generator 355a-355n for changing its respective address upon request by bus master 215. In some example aspects, address generator 355 may be a software algorithm stored in a memory or storage unit 360a-360n. In other sample aspects, an address generator circuit may form part of security chip 165. When embodied in a circuit form, linear feedback shift registers (LFSRs) may be employed, including the Galios type. In some example embodiments, other LFSRs, such as a Fibonacci type shift register or other pseudorandom types of shift registers, may be employed. Address generator 355 in each supply device 300 may implement the same pseudorandom number generation algorithm used by address generator 345 in security module 160 to derive the same address that security module 160 calculated for supply device 300 by way of the pseudorandom number generation algorithm. Each storage unit 360a-360n may store addresses of one or more supply devices 300 of imaging device 105 in an address array A 365. In one example embodiment, each supply device 300 may maintain an address array A of length n (where n represents the total number of supply devices 300) in storage unit 360 that contains addresses of all supply devices 300 in imaging device 105. A configuration certificate used to provide configuration settings and/or parameters for one or more components of imaging device 105 may be used to assign a supply identifier to each supply device 300, the supply identifier identifying an address index for each supply device 300 that may be used to determine an address of the supply device 300 from address array A.

In one example embodiment, imaging device 105 may employ a 7-bit addressing scheme. Each of the devices in imaging device 105 may have a default address based on its configured type. For example, using a 7-bit addressing scheme, the default address for security module 160 may be address 8 (0001000b), and the default address for a black toner bottle may be address 16 (0010000b). Security module 160 may not change its address and therefore always communicates with all the other devices in imaging device 105 using its default address. After a reset of imaging device 105, each supply device 300 may communicate over shared bus 305 using the default address of supply device 300 until supply device 300 receives a change address command from bus master 215. Once its address is changed, supply device 300 communicates with bus master 215 over shared bus 305 using its new address.

The format by which bus master 215 may transmit data on shared bus 305 may include a start bit, the address of the supply device 300 that is expected to respond, and a read or write bit. Bus master 215 may wait for addressed supply device 300 to acknowledge the receipt of the data transmitted by bus master 215. Once an acknowledgement is received, bus master 215 may then transmit a series of data to the addressed supply device 300. No other supply device 300 may interrupt the communication during the series of transmissions by bus master 215 or utilize shared bus 200 until bus master 215 releases the bus with a stop bit. After the transmission of each data word, the addressed supply device 300 may transmit an acknowledgment of receipt of the data word. If bus master 215 initially transmits a "read" bit, then in response thereto, supply device 300 may transmit data words to bus master 215, whereupon bus master 215 may acknowledge receipt of the data words after each transmission by the addressed supply device 300. When bus master 215 has received all of the data requested, it may transmit a "not-acknowledge" message to indicate end of the read transfer. Supply device 300 may then release shared bus 305. As is known with the I²C protocol, bus master 215 is in complete control of communications on shared bus 305.

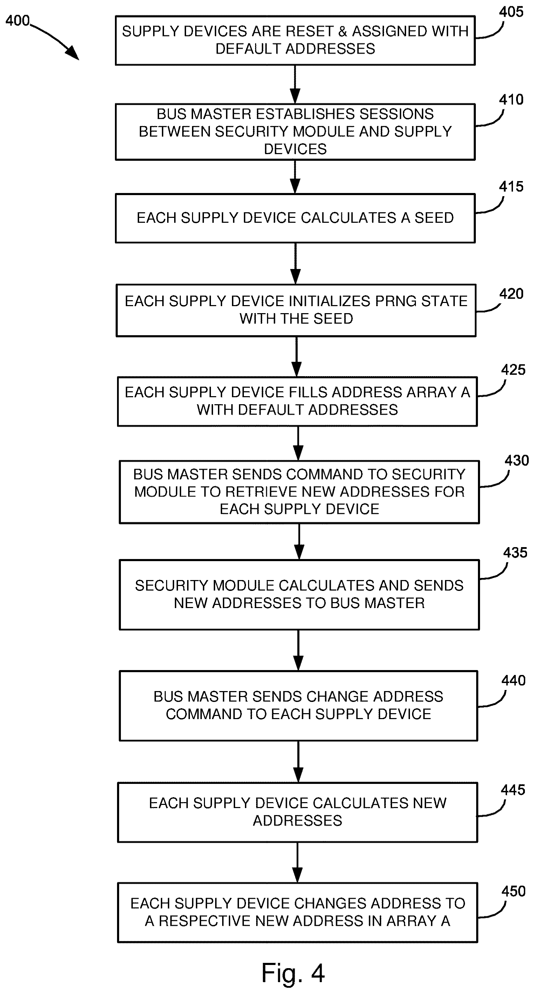

Fig. 4 shows a flowchart illustrating one example embodiment of a method 400 of changing and/or setting the addresses of supply devices 300 in shared bus system 200. The start of the process is shown in block 405, wherein each supply device 300a-300n has been reset, such as after installation or at an instance when power is first supplied to supply device 300a-300n, and assigned a default address. Default addresses for supply devices 300 may be retrieved from a non-volatile memory (not shown).

To initiate communications with supply devices 300, bus master 215 facilitates establishing sessions between security module 160 and each of supply devices 300a-300n at block 410. Communications between security module 160 and each of supply devices 300 may be encrypted using session keys. Each session key may be calculated using data words exchanged between security module 160 and supply devices 300. Security module 160 may generate one address initialization vector (IV) and transmit the initialization vector to each supply device 300a-300n with session key data. The initialization vector may be a random bit string or a fixed arbitrary constant.

At block 415, each supply device 300a-300n may use the initialization vector with a key to calculate a seed for a pseudorandom number generation algorithm implemented by address generator 355. In one example embodiment, each address generator 355a-355n may use a 256-bit SHA-2 hash function which takes the seed and the initialization vector as inputs and generates a fixed size 256-bit output corresponding to the seed (e.g., seed = SHA256 (IV ∥ key)). It will also be appreciated by those of ordinary skill in the art that other pseudorandom number generation algorithms may be used to calculate the seed in some example embodiments. Some pseudorandom number generation algorithms include, but are not limited to, a linear congruential generator, a linear feedback shift register, Mersenne Twister, or a cipher-based algorithm such as Advanced Encryption Standard (AES). While it has been described that the PRNG seed is calculated from a nonce and key using SHA-2, a different operation may be used in place of SHA-2 in some example aspects. For example, Hash Message Authentication Code (HMAC) or AES encryption may be used to calculate the PRNG seed. In other example aspects, instead of using a shared secret key, the seed may be established using a public key exchange, such as Diffie-Hellman which is based upon finite field cryptography or on elliptic curve cryptography. In yet other example aspects, security module 160 may generate and send the seed to supply devices 300 in encrypted form. The encryption may be symmetrical, such as AES, with a shared private key, or asymmetrical, such as RSA, with public keys.

At block 420, each supply device 300a-300n may initialize the PRNG state with the seed (e.g., state₀ = seed). Thereafter, the 256-bit PRNG state may be updated using 256-bit SHA-2 based upon the previous PRNG state (e.g., stateᵢ = SHA256(stateᵢ₋₁)) each time random data is needed, such as when new addresses for supply devices 300 are requested.

At block 425, each supply device 300 may initialize and fill address array A of storage unit 360 with the default addresses. As discussed above, the configuration certificate may be used to assign a supply identifier for each type of supply device 300, the supply identifier being used to determine an address index of a supply device 300 in address array A.

Bus master 215 may initiate address changes for supply devices 300 periodically. The time to change addresses for supply devices 300 may be based upon a random or fixed period of time in some example embodiments. In other example embodiments, the time to change addresses may be based upon the operational history of imaging device 105 such as when a certain number of transactions have transpired. To initiate an address change operation, bus master 215 may send a command to security module 160 over bus 310 to retrieve new addresses for supply devices 300 at block 430. In response, security module 160 may calculate new addresses for supply devices 300 using a predetermined algorithm and send the new addresses to bus master 215 over bus 310 at block 435. Bus master 215 needs no knowledge of the algorithm used by security module 160 to calculate the new addresses. In some example aspects, bus 310 may be isolated from shared bus 305, and any supply device 300a-300n connected to shared bus 305 may not be able to eavesdrop on the new addresses calculated and transmitted by security module 160 to bus master 215. In other example aspects, the new addresses may be encrypted before being transmitted by security module 160 to bus master 215.

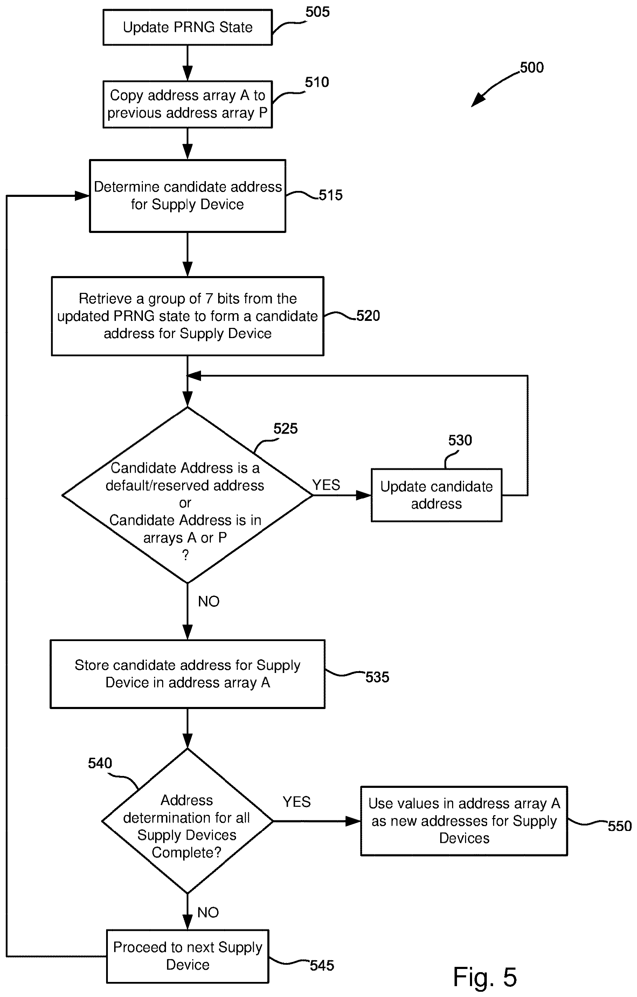

Referring to Fig. 5, a flowchart illustrating one example embodiment of a method 500 of determining new addresses for supply devices 300 is shown. In addition, for purposes of aiding description of the flowchart illustrated in Fig. 5, an example pseudo code for calculating new addresses is shown below:

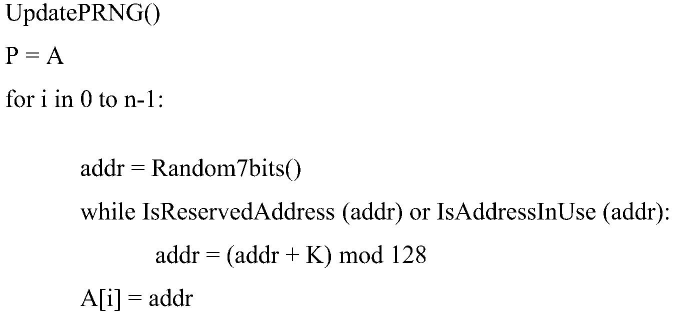

The start of the process is shown in block 505, where the PRNG state is updated to a new PRNG state. In the example pseudo code, the UpdatePRNG() function updates the PRNG state. In one example embodiment, the UpdatePRNG() function may update the PRNG state by calculating a new PRNG state using SHA256 with the previous PRNG state as an input. Address array A 350 containing addresses of supply devices 300 may then be copied to a previous address array P 375 in memory 340 at block 510.

For each supply device 300a-300n with an address index from i = 0 to n-1, a candidate address is determined. At block 515, a candidate address for supply device 300 may be determined at the outset of the iterated calculation of candidate addresses for all supply devices 300. In this example, the first supply device 300a may correspond to the supply device associated with an address index i = 0 and the last supply device 300n may correspond to supply device 300 associated with an address index i = n-1.

At block 520, a candidate address for supply device 300 may be generated by retrieving a group of seven bits from the new or updated PRNG state. In the example pseudo code, these seven bits of random data are retrieved using the Random7bits() function.

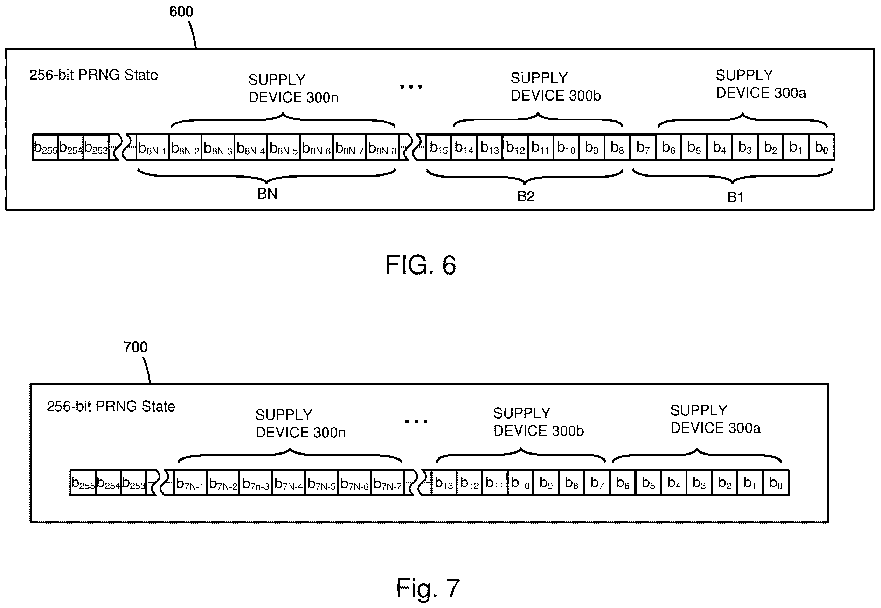

In one example embodiment, the candidate address for each supply device 300a-300n generated by the Random7bits() function may correspond to the bottom seven bits of each successive byte from the new PRNG state. As an example, a PRNG state 600 shown in Fig. 6 has a set of 256 bits b₀, b₁,..., b₂₅₅ generated using the UpdatePRNG() function. In this example embodiment, the bottom seven bits of a first byte B1 of the PRNG state 600 from bit b₆ to bit b₀ may be used to form the candidate address for first supply device 300a associated with an address index i=0, the bottom seven bits of a second byte B2 from bit b₁₄ to bit b₈ may be used to form the candidate address for second supply device 300b associated with an address index i=1, and so on. In this example embodiment, one bit is unused between each set of address bits.

In another example embodiment, the candidate address for each supply device 300 generated by the Random7bits() function may correspond to successive bits 7i + 6 down to 7i of the new PRNG state. As an example, a PRNG state 700 shown in Fig. 7 has a set of 256 bits b₀, b₁,..., b₂₅₅ generated using the UpdatePRNG() function. For first supply device 300a associated with an address index i=0, the first seven bits of PRNG state 700 from bit b₆ to bit b₀ may be used to form the candidate address. The next seven bits of PRNG state 700 from bit b₁₃ to bit b₇ may be used to form the candidate address for second supply device 300b associated with an address index i=1, and so on for the remaining supply devices 300. In this example embodiment, there are no unused bits between each set of address bits.

Although the above example embodiments show the use of successive bits from the PRNG state as address bits for supply devices 300, it will be appreciated that, in other example embodiments, each supply device 300a-300n may use any seven bits from the PRNG state as address bits, provided that the particular set of bits from different bit locations of the PRNG state used by each supply device 300a-300n is known to all supply devices 300 in imaging device 105 and security module 160. In addition, one or more bits (but not all) used to form the address bits for one supply device 300 may or may not overlap with bits used to form the address bits for another supply device 300. By knowing the particular set of bits used by each supply device 300a-300n in imaging device 105, each supply device 300a-300n can derive or arrive at the same addresses generated by security module 160 and each of other supply devices 300 in imaging device 106.

Referring back to Fig. 5, a determination is made as to whether the candidate address generated using the Random7bits() function is a default or a reserved address as determined by IsReservedAddress() function (at block 525). A determination may also be made as to whether the candidate address is in use by another device in imaging device 105 as determined by IsAddressInUse() function. In this example embodiment, the IsReservedAddress() function may return a value of 'true' if the candidate address is an I²C reserved address or any of the default addresses; otherwise, the IsReservedAddress() function may return a value of 'false'. In this example embodiment, IsAddressInUse() function may return a value of 'true' if the candidate address is found in address array A or previous address array P; otherwise, the IsAddressInUse() function may return a value of 'false'.

The determination in block 525 may be performed so that new addresses for supply devices 300 may not be any of the default addresses for any device or component in imaging device 105. The determination in block 525 may also be performed so that new addresses for supply devices 300 may prevent address conflicts. In particular, reserving the default addresses and not assigning any of the reserved addresses as new address may prevent address conflicts in the event that devices and/or components, including supply devices 300, in imaging device 105 are reset. For example, the broadcast address (address 0) may be a reserved address and cannot be used by any of supply devices 300. In one example embodiment, all other 7-bit addresses that are not default or reserved addresses may be used as new addresses. In another example aspect, such as in the I²C specification, some addresses are reserved for special purposes. For example, a special address (0000001b) is reserved for CBUS use in order for an I²C bus to connect to CBUS receivers. Addresses 11110XXb are also reserved in the I²C specification for use in 10-bit slave addressing. In one example embodiment of the present disclosure, these special and reserved addresses do not have any special meaning and may be used for addressing supply devices 300.

If the determination in decision block 525 is 'true' or affirmative, the process proceeds to block 530 where the candidate address may be updated to derive a new candidate address. The candidate address may be updated by adding a constant K to the candidate address and applying a modulus (MOD) function which keeps the next candidate address within a valid range. In the example pseudo code, the MOD function includes a "mod 128" operation, and a prime number, such as 13, may be used for *K* to cover all possible address values. In another example embodiment, K may be a co-prime with 128, such as 15. The candidate address may continue to be updated until each of IsReservedAddress() function and IsAddressInUse() function returns a 'false' value. If the decision in block 308 is 'false' or negative, the process proceeds to block 535.

At block 535, the candidate address may contain the next address for supply device 300 and may be written into address array A 350. At block 540, a determination is made as to whether or not new addresses for supply devices 300a-300n in imaging device 105 have been determined. Upon determining that not all addresses has been determined, example method 500 proceeds to block 545 where the address index i may be incremented to proceed with an address calculation for another supply device 300. Thereafter, the example method 500 loops back to block 515 to determine a candidate address for the next supply device 300. Thus, the process flow from block 515 to block 540 may be repeated until new addresses for all supply devices 300a-300n have been determined.

The candidate addresses for subsequent supply devices 300 may also be determined using the Random7bits() function. Accordingly, a candidate address for each subsequent supply device 300 may correspond to the next seven bits of random data retrieved using the Random7bits() function. In the example PRNG state 600 shown in Fig. 6, the next group of seven bits from bit b₁₄ to bit b₈ may be used to form the candidate address for the second supply device 300b, and so on. In the example PRNG state 700 shown in Fig. 7, the next group of seven bits from bit b₁₃ to bit b₇ may be used to form the candidate address for the second supply device 300b and so on. In these example embodiments, a candidate address for each supply device 300a-300n may correspond to a distinct or unique set of successive bits from the PRNG state 320. Address array A 350 may be filled with a new address for each supply device 300a-300n as the process cycles through each supply device 300a-300n. The previous address array P 375 ensures that all new addresses may be used after an address change. In this example algorithm, address collisions may be avoided since address array A 350 may not contain two elements with the same value.

Referring to Fig. 5, when it is determined in decision block 540 that addresses for all supply devices 300 in imaging device 105 have been determined, process 500 proceeds to block 550 where values stored in address array A 350 may be used as new addresses for supply devices 300. The supply identifier assigned by the configuration certificate of each supply device 300a-300n may be used to determine the address index associated with the supply device 300a-300n in address array A 350.

Referring back to Fig. 4, bus master 215 may request each supply device 300a-300n to change its respective address at block 440 upon receiving the new addresses from security module 160. This request may be transmitted by way of a change address command on shared bus 305.

When each supply device 300a-300n receives the change address command from bus master 215, each supply device 300a-300n performs or executes the same address change algorithm described in Fig. 5, utilizing corresponding address array A 365a-365n and corresponding previous address array P 370a-370n of corresponding storage unit 360a-360n in order to calculate new addresses for all supply devices 300 at block 445. Each supply device 300a-300n may fill corresponding address array A 365a-365n of corresponding storage unit 360a-360n with the new addresses generated by respective address generator 355a-355n.

Each supply device 300 may send an acknowledgment to bus master 215 using its old address after executing the address change algorithm. After sending the acknowledgement, each supply device 300a-300n may change its address to a respective new address from corresponding address array A 365a-365n at block 450. In this example, each supply device 300a-300n may change its address to an address value stored in element A[i] of address array A wherein i is the index value that is associated with the supply identifier in the configuration certificate assigned to supply device 300.

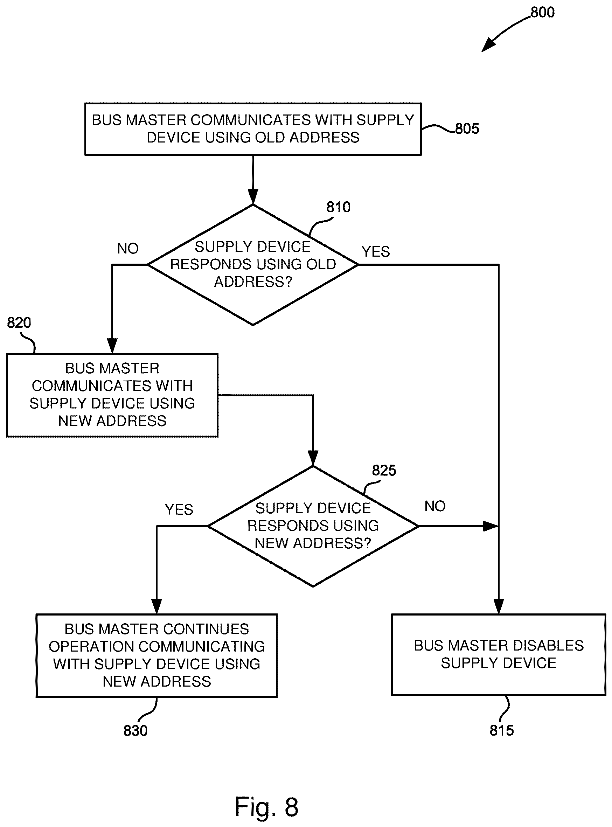

In one example embodiment, bus master 215 may test if addresses of supply devices 300 have successfully changed into new addresses as generated and stored in address array A 330. Fig. 8 shows one example method 800 for verifying if supply devices 300 have correctly changed their respective addresses.

At block 805, bus master 215 may communicate with a supply device 300 using the old address of supply device 300 in previous address array P 375. If, at block 810, supply device 300 responds using its old address in previous address array P 370, then bus master 215 may determine that supply device 300 has not changed its address. In response, bus master 215 may disable supply device 300 at block 815.

If, at block 810, supply device 300 does not respond on its old address as stored in previous address array P 375, bus master 215 may attempt to communicate with supply device 300 using the new address of supply device 300 stored in address array A 330 (at block 820).

At block 825, if supply device 300 does not respond on the new address (i.e., the new address of supply device 300 stored in address array A 330 does not match the new address stored in address array A 365), then supply device 300 may have incorrectly generated a new address. Bus master 215 may then disable the supply device (block 815). If, at block 825, supply device 300 responds on the new address, supply device 300 correctly calculated the new address, which matches with the new address stored in address array A 330. Bus master 215 may then continue to communicate with the supply device 300 using its new address at block 830.

Both bus master 215 and the addressed supply devices 300 may be updated with new supply device addresses without the supply devices transmitting their new addresses on shared bus 305 such that any device connected to shared bus 305 may not be able to gain knowledge of the new addresses. Thereafter, all subsequent transmissions by bus master 215 to addressed supply devices 300 may occur on the newly-assigned addresses. In the event that supply device 300 is disabled due to incorrect response to the challenge sent by bus master 215, such supply device 300 may be detected as a clone, counterfeit or otherwise unauthorized component, and appropriate actions may be taken or recommended. For example, a user may be advised to acquire an authorized supply device via a display of user interface 135 or to contact a system administrator or technical support for assistance in addressing the issue. Imaging device 105 may be configured to address such a situation to protect against the use of unauthorized components in order to optimize performance of and/or prevent damage to imaging device 105.

The description of the details of the example embodiments have been described in the context of using an I²C 7-bit addressing scheme. However, it will be appreciated that the teachings and concepts provided herein can be applied to other addressing schemes, such as 10-bit addressing schemes. Moreover, such teachings and concepts may be applied on any addressed bus, such as Modbus or USB.

Relatively apparent advantages of the many embodiments include, but are not limited to, providing a greater number of addresses available for supply device addressing compared to previous methods. In particular, by utilizing all bits of an address as variable bits and using any non-reserved or non-default addresses for each supply device 300a-300n, a greater number of possible addresses may be achieved. Moreover, having the entire length of an address as variable may make it more difficult for attackers to break or hack the shared bus system, thereby improving security. The address changing schemes described herein also introduce notions of a supply device generating addresses for all supply devices in the system with each new supply device address being derived from a common PRNG state, unlike conventional address changing schemes wherein individual components calculate only their own respective new addresses.

Advantages also introduce additional notions of address calculations being done by system security module 160 and each supply device 300a-300n, and not by bus master 215 facilitating communication between system security module 160 and supply devices 300a-300n, as in the case of conventional master/slave configurations. Instead, bus master 215 may read or retrieve the addresses from system security module 160 separate from bus master 215, and bus master 215 needs no knowledge of the algorithm used to determine supply device 300 addresses. Bus master 215 also communicates with security module 160 over bus 310 that is isolated from shared bus 305 that bus master 215 uses to communicate with supply devices 300. In this way, any device connected to shared bus 305 used by bus master 215 to communicate with supply devices 300 may not be able to eavesdrop on the address calculation by system security module 160 and the transmission of new addresses to bus master 215. Moreover, bus master 215 individually polls each supply device 300a-300n to change its address without supply device 300a-300n having to communicate its new address to bus master 215, thereby preventing attackers from gaining knowledge of the new address.

It will be understood that the example applications described herein are illustrative and should not be considered limiting. It will be appreciated that the actions described and shown in the example flowcharts may be carried out or performed in any suitable order. It will also be appreciated that not all of the actions described in Figs. 4, 5, and 8 need to be performed in accordance with the example embodiments of the disclosure and/or additional actions may be performed in accordance with other example embodiments of the disclosure.

Many modifications and other embodiments of the disclosure set forth herein will come to mind to one skilled in the art to which these disclosures pertain having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

### ADDITIONAL EMBODIMENTS

In the following section additional embodiments of the present invention are described. In the additional embodiments, example component circuitry for a replaceable printer component includes an interface for coupling to a master device and an address generator coupled to the interface for generating a plurality of addresses for a plurality of components is disclosed. When the interface receives a command from the master device, the address generator updates a pseudorandom number generator (PRNG) state and generates the plurality of addresses by retrieving different sets of bits from the PRNG state for each of the plurality of components. For each of the plurality of components, the component circuitry assigns one of the plurality of addresses to one of the plurality of components based upon a value associated with the one component.

In a first additional embodiment, component circuitry is disclosed, comprising: an interface for coupling to a master device; and an address generator coupled to the interface for generating a plurality of addresses for a plurality of components, wherein when the interface receives a command from the master device, the address generator updates a pseudorandom number generator (PRNG) state and generates the plurality of addresses by retrieving different sets of bits from the PRNG state for each of the plurality of components.

A second embodiment is disclosed, employing the component circuitry of the first embodiment, wherein, for each of the plurality of components, the component circuitry assigns one of the plurality of addresses to one of the plurality of components based upon a value associated with the one component.

A third embodiment is disclosed, employing the component circuitry of the first embodiment, wherein each set of bits retrieved from the PRNG state forms a candidate address for a component of the plurality of components.

A fourth embodiment is disclosed, employing the component circuitry of the third additional embodiment, wherein the component circuitry determines that the candidate address is not a valid address if the candidate address is one of a reserved address, a default address, and an address that has been assigned to another component.

A fifth embodiment is disclosed, employing the component circuitry of the third additional embodiment, wherein the component circuitry updates the candidate address if the candidate address is not a valid address for assigning to the component.

A sixth embodiment is disclosed, employing the component circuitry of the first embodiment, wherein each different set of bits includes successive bits from the PRNG state.

A seventh embodiment is disclosed, employing the component circuitry of the first embodiment, wherein the different sets of bits are retrieved from successive bytes from the PRNG state.

An eighth embodiment is disclosed, employing the component circuitry of the first embodiment, wherein the PRNG state is a 256-bit PRNG state.

A ninth embodiment is disclosed, employing the component circuitry of the first embodiment, wherein the component circuitry uses a distinct address from the plurality of addresses as a new address for at least one subsequent communication with the master device.

A tenth embodiment is disclosed, employing the component circuitry of the ninth embodiment, wherein the distinct address is selected based upon a value associated with a component to which the component circuitry is associated.

An eleventh embodiment is disclosed, employing the component circuitry of the first embodiment, wherein the component circuitry is connectable to a consumable supply device.

In a twelfth embodiment, a supply item for installation in an imaging device having a master controller is disclosed, comprising: a housing; and a chip connected to the housing, the chip having an address generator coupled for generating a plurality of addresses for the supply item, wherein when the chip receives a command from the master controller, the address generator updates a pseudorandom number generator (PRNG) state and generates the plurality of addresses by retrieving different sets of bits from the PRNG state for the supply item.

A thirteenth embodiment is disclosed, employing the component circuitry of the twelfth embodiment, wherein each different set of bits includes successive bits from the PRNG state.

A fourteenth embodiment is disclosed, employing the component circuitry of the twelfth embodiment, wherein the different sets of bits are retrieved from successive bytes from the PRNG state.

A fifteenth embodiment is disclosed, employing the component circuitry of the twelfth embodiment, wherein the chip uses a distinct address from the plurality of addresses as a new address for at least one subsequent communication with the master controller.

A sixteenth embodiment is disclosed, employing the component circuitry of the fifteenth embodiment, wherein the chip determines the distinct address based upon a value associated with the supply item.

In a seventeenth embodiment, a chip for installation with a supply item is disclosed, comprising a memory for storing an address generator for generating a plurality of addresses for a plurality of supply items, wherein when the chip receives a command from a master device, the address generator updates a pseudorandom number generator (PRNG) state and generates the plurality of addresses by retrieving different sets of bits from the PRNG state for each of the plurality of supply items.

An eighteenth embodiment is disclosed, employing the chip of the seventeenth embodiment, wherein each different set of bits includes successive bits from the PRNG state.

A nineteenth embodiment is disclosed, employing the chip of the seventeenth embodiment, wherein the different sets of bits are retrieved from successive bytes from the PRNG state.

A twentieth embodiment is disclosed, employing the chip of the seventeenth embodiment, wherein the chip uses a distinct address from the plurality of addresses as a new address for at least one subsequent communication with the master device.

Further disclosure is provided in the following statements:
Statement 1: A method of determining addresses for a plurality of components, comprising:
   receiving, from a master device, an address change request;
   in response to the received address change request, updating a pseudorandom number generator (PRNG) state based on a previous state thereof; and
   for each component, retrieving a set of bits from the PRNG state to form a candidate address for the component and determining a new component address for the component based on the candidate address such that new component addresses of the plurality of components are determined based on different sets of bits retrieved from the same PRNG state.
Statement 2: The method of statement 1, wherein the retrieving the set of bits from the PRNG state for each component includes retrieving a set of successive bits from the PRNG state.
Statement 3: The method of statement 1, wherein the determining the new component address for the component includes determining whether the candidate address is a valid address for assigning to the component.
Statement 4: The method of statement 3, wherein the determining whether the candidate address is a valid address includes determining whether the candidate address is a reserved address.
Statement 5: The method of statement 3, wherein the determining whether the candidate address is a valid address includes determining whether the candidate address is a default address.
Statement 6: The method of statement 3, wherein the determining whether the candidate address is a valid address includes determining whether the candidate address is an address that has been assigned to another component.
Statement 7: The method of statement 3, further comprising assigning the candidate address as the new component address of the component upon determining that the candidate address is a valid address for assigning to the component.
Statement 8: The method of statement 3, further comprising updating the candidate address upon determining that the candidate address is not a valid address for assigning to the component.
Statement 9: A method of setting addresses of a plurality of components, comprising:
   sending, by a master device, a command to a security module to retrieve new addresses for the plurality of components;
   in response to the received command, generating, by the security module, a plurality of new addresses for the plurality of components based on a pseudorandom number generator (PRNG) state, and sending, by the security module, the plurality of new addresses to the master device;
   in response to receiving the plurality of new addresses from the security module, sending, by the master device, an address change request to each of the plurality of components;
   in response to the received address change request, generating, by each component, new addresses for the plurality of components based on the PRNG state, the new addresses generated by each component corresponding to the plurality of new addresses generated by the security module; and
   using, by each component, a distinct new address from the plurality of new addresses as a new component address determined based upon an index value associated with the component.
Statement 10: The method of statement 9, wherein the generating the plurality of new addresses by the security module and each component includes retrieving, for each component, a set of bits from the PRNG state to form a candidate address for each component, and determining, for each component, a new address based on the candidate address.
Statement 11: The method of statement 10, wherein the determining the new address for each component includes determining whether the candidate address is one of a reserved address, a default address, and an address that has been assigned to another component.

## Claims

1. In an imaging device having a plurality of components, a method of determining an address of a component of the plurality of components, comprising:
updating, by component circuitry associated with the component, a pseudorandom number generator (PRNG) state based on a previous state thereof;
generating, by the component circuitry, a plurality of new component addresses for the plurality of components based upon the PRNG state; and
using, by the component circuitry, a distinct component address from the plurality of new component addresses as a component address for at least one subsequent communication with a master device.

2. The method of claim 1, wherein the generating the plurality of new component addresses includes determining the plurality of new component addresses based on different sets of bits retrieved from the PRNG state.

3. The method of claim 1, wherein the generating the plurality of new component addresses includes retrieving, for each component of the plurality of components, a set of successive bits from the PRNG state to form a candidate address for each component, and determining, for each component, a new component address based on the candidate address.

4. The method of claim 3, wherein the determining the new component address for each component includes determining whether the candidate address is a valid address for assigning to the component.

5. The method of claim 4,
wherein the determining whether the candidate address is a valid address includes determining whether the candidate address is one of a reserved address and a default address, or
wherein the determining whether the candidate address is a valid address includes determining whether the candidate address is an address that has been assigned to another component, or
further comprising assigning the candidate address as the new component address of the component upon determining that the candidate address is a valid address for assigning to the component.

6. The method of claim 4, further comprising updating the candidate address upon determining that the candidate address is not a valid address for assigning to the component.

7. The method of claim 1, further comprising determining the distinct component address based on an index value associated with the component.

8. Component circuitry comprising:
an interface for coupling to a master device; and
an address generator coupled to the interface for generating a plurality of addresses for a plurality of components,
wherein when the interface receives a command from the master device, the address generator updates a pseudorandom number generator (PRNG) state and generates the plurality of addresses by retrieving different sets of bits from the PRNG state for each of the plurality of components.

9. The component circuitry of claim 8, wherein, for each of the plurality of components, the component circuitry is configured to assign one of the plurality of addresses to one of the plurality of components based upon a value associated with the one component.

10. The component circuitry of claim 8, wherein each set of bits retrieved from the PRNG state forms a candidate address for a component of the plurality of components.

11. The component circuitry of claim 10,
wherein the component circuitry is configured to determine that the candidate address is not a valid address if the candidate address is one of a reserved address, a default address, and an address that has been assigned to another component, or
wherein the component circuitry is configured to update the candidate address if the candidate address is not a valid address for assigning to the component.

12. The component circuitry of claim 8,
wherein each different set of bits includes successive bits from the PRNG state, or
wherein the different sets of bits are retrieved from successive bytes from the PRNG state, or
wherein the PRNG state is a 256-bit PRNG state, or
wherein the component circuitry is connectable to a consumable supply device.

13. The component circuitry of claim 8, wherein the component circuitry uses a distinct address from the plurality of addresses as a new address for at least one subsequent communication with the master device, and optionally, wherein the distinct address is selected based upon a value associated with a component to which the component circuitry is associated.

14. A supply item for installation in an imaging device having a master controller comprising:
a housing; and
a chip connected to the housing, the chip having an address generator coupled for generating a plurality of addresses for the supply item,
wherein when the chip receives a command from the master controller, the address generator updates a pseudorandom number generator (PRNG) state and generates the plurality of addresses by retrieving different sets of bits from the PRNG state for the supply item.

15. A chip for installation with a supply item comprising a memory for storing an address generator for generating a plurality of addresses for a plurality of supply items, wherein when the chip receives a command from a master device, the address generator updates a pseudorandom number generator (PRNG) state and generates the plurality of addresses by retrieving different sets of bits from the PRNG state for each of the plurality of supply items.
